# EUROPEAN PATENT SPECIFICATION

(11) **EP 3 102 745 B1**
(45) Date of publication and mention of the grant of the patent: **10.06.2020**
(21) Application number: 15702569.3
(22) Date of filing: 30.01.2015
(51) Int. Cl.: E03B 7/07, E03C 1/122, F24D 19/08, E03C 1/10, E03C 1/288

(54) **PLUMBING DEVICE**
KLEMPNERVORRICHTUNG
DISPOSITIF DE PLOMBERIE

(30) Priority: 30.01.2014 GB 201401557
(43) Date of publication of application: 14.12.2016
(73) Proprietor: Armstrong, Russell Winston, Chellaston, Derbyshire DE73 5AR (GB)
(72) Inventor: Armstrong, Russell Winston, Chellaston, Derbyshire DE73 5AR (GB)
(74) Representative: Adamson Jones
(86) International application number: PCT/GB2015/050219
(87) International publication number: WO 2015/114348

(56) References cited:
- DE-U1-202012 103 132
- GB-A- 2 366 830
- GB-A- 2 478 124
- JP-A- S5 563 071
- US-A- 4 918 940

## Description

The present invention relates to a plumbing device which allows a pressure and/or temperature relief valve for a fresh water system to be connected to a waste pipe or soil stack without the risk of back contamination.

An example of the use of a relief valve is with an unvented domestic hot water storage system (UVHWSS) or unvented hot water heater (UVHWH). Such a system typically has a temperature and/or pressure relief valve connected to a discharge pipe. The regulations for connection of the discharge pipe to a waste water system are strict because of the risk of back contamination from the pathogenic water in the waste water system to the fresh water in the storage system. Typically, the regulations require a tundish to provide a visible point of discharge and an air gap (to provide backflow prevention) and the outflow from the tundish to be connected in a particular way to discharge above an external ground floor gulley. Such a connection requires careful engineering and is expensive to install.

In order to connect the vent valve to a soil stack within a building, arrangements need to be made to provide an odour trap to prevent any foul gases from the soil stack from entering the domestic location. On most domestic installations, a water trap would be used to prevent escape of gases and odours from the soil stack. Typically, a water trap comprises a bended tube in which water is trapped. A water trap allows passage of liquid and suspended solids but not gases. Generally speaking, a water trap is not suitable for use with a tundish as it will become ineffective through drying out. A water trap is also relatively bulky and is not suitable for use in all locations.

More recently, a product has been approved which provides an odour trap which allows the discharge pipe to be connected to a soil stack within a building. This product is designed to be used in association with a tundish and is not easy to use with an UVHWH because of its overall length.

A way of ameliorating these problems has been sought. DE 20 2012 103132 U1 discloses a discharge connector for draining water from a water system to a drain. The connector body has air openings and a plurality of webs that cover the openings to prevent escape of splashing water. Other prior art devices are disclosed in JP S55 63071, GB 2 478 124, GB 2 366 830 and US 4 918 940.

According to the invention, there is provided a connector as recited in Claim 1.

The advantages of the connector according to the invention include that as it is an adapted tundish, it is compact and space saving such that it can be used in a restricted location such as with an under counter water heater. Its simple construction enables it to have a rating for temperatures up to 100°C.

In some embodiments, the pre-selected pressure is a pressure applied by a flow of liquid from the inlet such as may be produced by a pressure and/or temperature relief valve in operation. For example, the pre-selected pressure may be sufficiently high to prevent accidental opening of the non-return valve (for example due to dust or condensation on the valve) but not so high to restrict flow of liquid from the inlet such that liquid overflows from the open upper chamber. A skilled person would be able to determine a suitable pressure.

In some embodiments, the chamber has a tubular middle chamber arranged between the upper chamber and the closable lower chamber. In some embodiments, the pre-selected pressure is no more than the pressure from a volume of liquid which can fill the tubular middle chamber. The advantages of the middle chamber include that it reduces the risk of accidental opening of the non-return valve by providing a receptacle for collection of liquid; and that the presence of a non-return valve in a tundish does not interfere with the operation of the tundish because the risk of spillage of liquid from the tundish is reduced.

In some embodiments, the non-return valve may be a diaphragm check valve, a lift valve or a duck bill valve.

In some embodiments, the valve is a lift valve having a valve stem. In some embodiments, the upper chamber provides one or more ribs to support a valve guide for the valve stem. In some embodiments, the lift valve has a resilient member to bias it into a closed position. In some embodiments, the resilient member is arranged on the lift valve above the valve guide. Provision of a resilient member above the valve guide has the advantage of enabling the valve stem to be self-guiding such that only one valve guide is required.

The circumferential upper chamber wall may support the one or more arms.

The invention will now be illustrated with reference to the following Figures of the accompanying drawings which are not intended to limit the scope of the invention claimed:
**FIGURE 1** shows a schematic vertical cross-sectional view of a first embodiment of the invention;
**FIGURE 2** shows a schematic overhead plan view of the first embodiment of the invention;
**FIGURE 3** shows a schematic horizontal cross-sectional view of the first embodiment of the invention taken along line marked A-A' on Figure 1;
**FIGURE 4** shows a schematic vertical cross-sectional view of a second embodiment of the invention;
**FIGURE 5** shows a schematic overhead plan view of the second embodiment of the invention;
**FIGURE 6** shows a a schematic vertical cross-sectional view of a third embodiment of the invention;
**FIGURE 7** shows a schematic overhead plan view of the second embodiment of the invention.

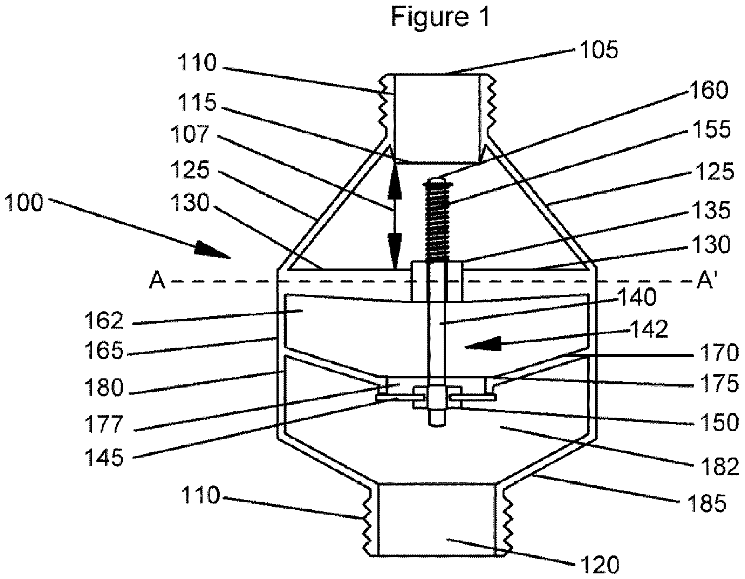

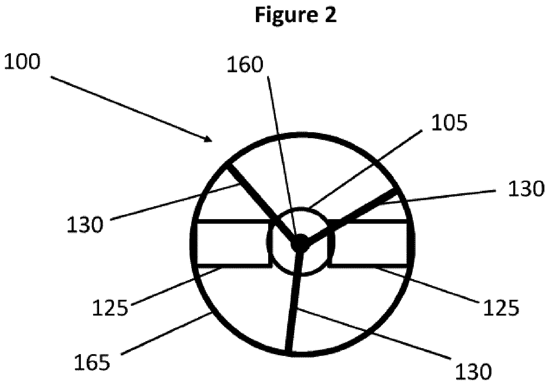

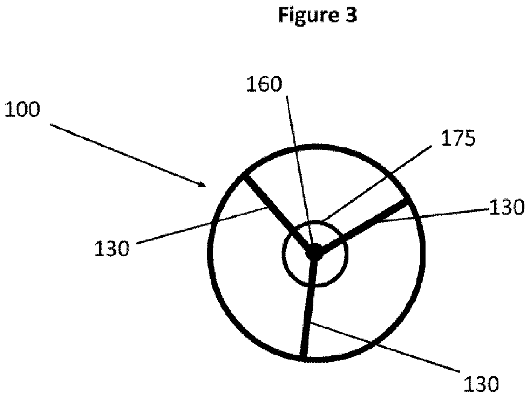

A first embodiment of a connector according to the invention indicated generally at 100 is shown in Figures 1, 2 and 3. Connector 100 has an inlet 105, an upper chamber 162, a middle chamber 177, a lower chamber 182 and a lift valve indicated at 142.

Inlet 105 is supported above upper chamber 162 by a pair of diametrically opposed arms 125 such that a vertical gap 107 is formed between the inlet and the upper chamber 162. Inlet 105 has an outer thread 110 for engaging with a tap connector (or other pipe fitting) and forms a tapered beak drip 115 which projects downwards into the vertical gap 107. Arms 125 are arranged so that the vertical gap 107 is of a height sufficient to provide an air gap of type AA which is typically at least about 20mm.

Upper chamber 162 is shaped by circumferential upper chamber wall 165 and a shelving upper chamber floor 170. Upper chamber 162 has an open mouth for receiving liquid from the inlet. The upper chamber wall 165 supports arms 125. Upper chamber floor 170 forms upper chamber floor opening 175 which is the opening to tubular middle chamber 177 such that upper chamber floor 170 has an inverted truncated conical shape and such that the upper chamber floor 170 has a funnel shape for directing liquid to the upper chamber floor opening 175. Upper chamber wall 165 has three inwardly projecting ribs 130 which support valve guide 135 which is arranged in the centre of the opening to upper chamber 162.

The lift valve 142 has the following components: a valve stem 140, a valve disc 145, a valve disc fixing 150, a valve spring 155 and a valve spring clip 160. The valve stem 140 is arranged to run through valve guide 135. At an upper part of the valve stem 140 above the valve guide 135, valve spring 155 is arranged on the valve stem 140 and secured to an upper end of the valve stem 140 by valve spring clip 160. At a lower end of the valve stem 140, the valve disc 145 is secured by valve disc fixing 150. Valve disc 145 is formed from a resilient material such as a plastics or rubber material, for example EPDM rubber. In an alternative embodiment, the valve spring 155 may be replaced by a suitable resilient member as would be known to a person of skill in the art.

The tubular middle chamber 177 has a lower opening which forms a valve seat for lift valve 142 and which lower opening is normally closed by valve disc 145 which is biased by the valve spring 155 into that position. The valve spring 155 is arranged to open the lift valve 142 at a pre-selected pressure on the valve disc 145. A suitable pre-selected pressure may be that determined by when the tubular middle chamber 177 is full of liquid.

The lower chamber 182 has a ceiling 170,177, a tubular lower chamber wall 180 and a shelving lower chamber floor 185. The ceiling 170,177 of the lower chamber 182 is formed by the upper chamber floor 170 and middle chamber 177 and forms an opening which is normally closed by valve 142. Lower chamber floor 185 shelves to form an opening for outlet 120 such that lower chamber floor 185 has an inverted truncated conical shape and such that the lower chamber floor 185 has a funnel shape for directing liquid to outlet 120. Outlet 120 has a tubular shape and has an outer thread 110 for engaging with a tap connector (or other pipe fitting).

In an alternative embodiment, the diameter of valve disc 145 may be less than that for outlet 120 such that the valve spring 155 and/or valve disc 145 may be replaced by removing valve spring clip 160, allowing the lift valve 142 to drop through outlet 120 and out of the connector 100 so that one or more of the components of lift valve 142 may be replaced.

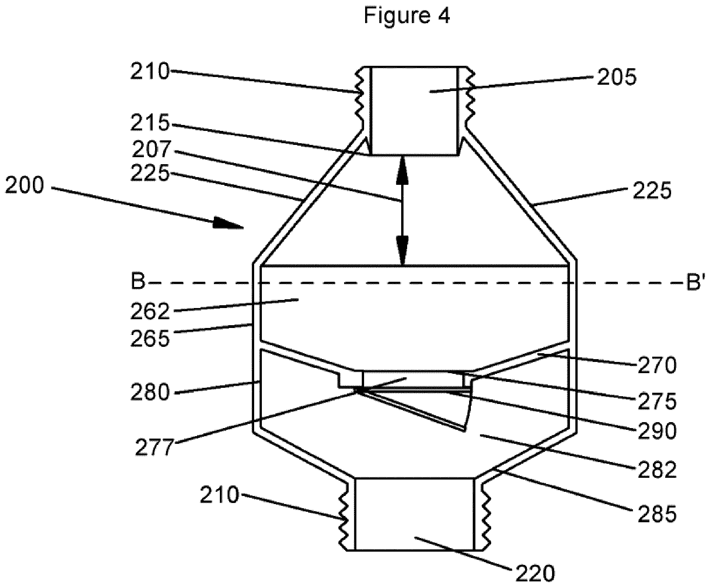

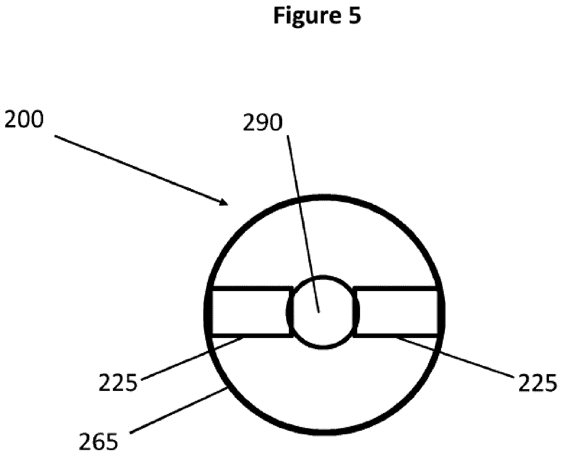

A second embodiment of a connector according to the invention indicated generally at 200 is shown in Figures 4 and 5. Connector 200 has an inlet 205, an upper chamber 262, a middle chamber 277, a lower chamber 282 and a diaphragm check valve 290. The numbering of the reference numerals for features of the second embodiment corresponds to that for like features of the first embodiment.

Inlet 205 is supported above upper chamber 262 by a pair of diametrically opposed arms 225 such that a vertical gap 207 is formed between the inlet and the upper chamber 262. Inlet 205 has an outer thread 210 for engaging with a tap connector (or other pipe fitting)and forms a tapered beak drip 215 which projects downwards into the vertical gap 207. Arms 225 are arranged so that the vertical gap 207 is of a height sufficient to provide an air gap of type AA which is typically at least about 20mm.

Upper chamber 262 is shaped by circumferential upper chamber wall 265 and a shelving upper chamber floor 270. Upper chamber 262 has an open mouth for receiving liquid from the inlet. The upper chamber wall 265 supports arms 225. Upper chamber floor 270 forms upper chamber floor opening 275 which is the opening to tubular middle chamber 277 such that upper chamber floor 270 has an inverted truncated conical shape and such that the upper chamber floor 270 has a funnel shape for directing liquid to the upper chamber floor opening 275. The features of the upper part of connector 200 are shown in the overhead plan view depicted in Figure 5.

Diaphragm check valve 290 is formed from a resilient material and is shaped to be biased into a closed position. Diaphragm check valve 290 is shown in an open position by a partially occluded form shown on Figure 4. The tubular middle chamber 277 has a lower opening which forms a valve seat for lift valve 142 and which lower opening is normally closed by the diaphragm check valve 290. The diaphragm check valve 290 is attached the lower opening of middle chamber 277. The diaphragm check valve 290 is arranged to open at a pre-selected pressure. A suitable pre-selected pressure may be that determined by when the tubular middle chamber 277 is full of liquid.

The lower chamber 282 has a ceiling 270,277, a tubular lower chamber wall 280 and a shelving lower chamber floor 285. The ceiling 270,277 of the lower chamber 282 is formed by the upper chamber floor 270 and middle chamber 277 and forms an opening which is normally closed by diaphragm check valve 290. Lower chamber floor 285 shelves to form an opening for outlet 220 such that lower chamber floor 285 has an inverted truncated conical shape and such that the lower chamber floor 285 has a funnel shape for directing liquid to outlet 220. Outlet 220 has a tubular shape and has an outer thread 210 for engaging with a tap connector (or other pipe fitting).

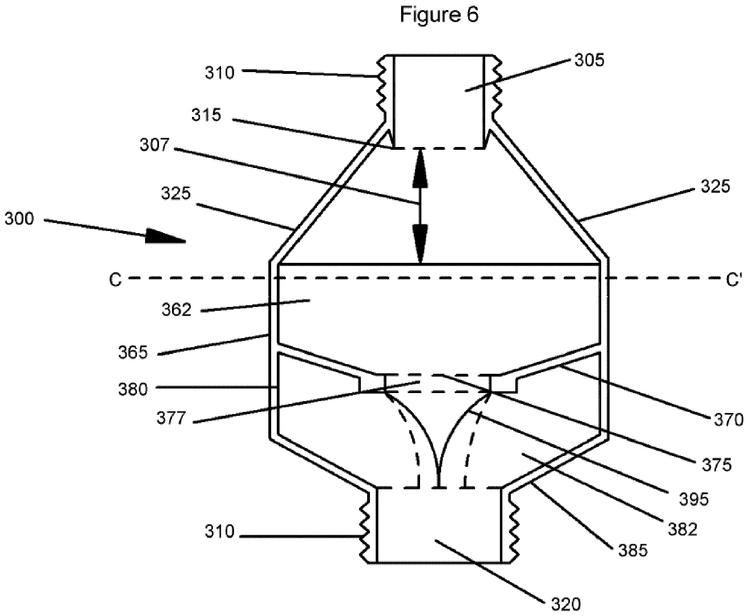

A third embodiment of a connector according to the invention indicated generally at 300 is shown in Figure 6. Connector 300 has an inlet 305, an upper chamber 362, a middle chamber 377, a lower chamber 382 and a duck bill valve 395. The numbering of the reference numerals for features of the third embodiment corresponds to that for like features of the first and second embodiments.

Inlet 305 is supported above upper chamber 362 by a pair of diametrically opposed arms 325 such that a vertical gap 307 is formed between the inlet and the upper chamber 362. Inlet 305 has an outer thread 310 for engaging with a tap connector (or other pipe fitting) and forms a tapered beak drip 315 which projects downwards into the vertical gap 307. Arms 325 are arranged so that the vertical gap 307 is of a height sufficient to provide an air gap of type AA which is typically at least about 20mm.

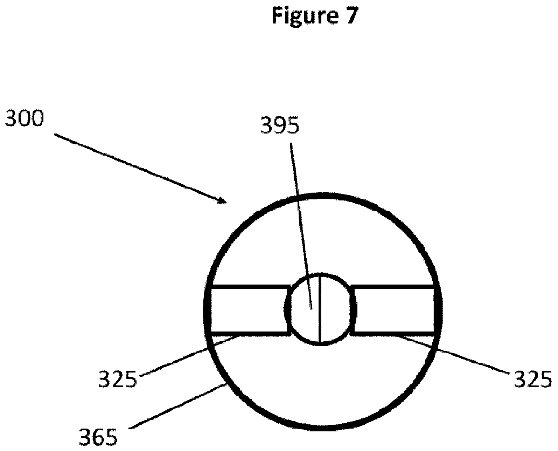

Upper chamber 362 is shaped by circumferential upper chamber wall 365 and a shelving upper chamber floor 370. Upper chamber 362 has an open mouth for receiving liquid from the inlet. The upper chamber wall 365 supports arms 325. Upper chamber floor 370 forms upper chamber floor opening 375 which is the opening to tubular middle chamber 377 such that upper chamber floor 370 has an inverted truncated conical shape and such that the upper chamber floor 370 has a funnel shape for directing liquid to the upper chamber floor opening 375. The features of the upper part of connector 200 are shown in the overhead plan view depicted in Figure 7.

Duck bill valve 395 is formed from a resilient material biased to a closed position. Duck bill valve 395 is shown in an open position by the partially occluded form shown on Figure 6. Duck bill valve comprises two downwardly extending, opposed flexible impervious wall members of complementary shapes disposed face to face in surface contact so that there is no through passage between them in their normal state and where they are resiliently urged into the normal state.

The tubular middle chamber 377 has a lower opening on which the wall members of the duck bill valve 395 are mounted and which lower opening is normally closed by the duck bill valve 395. Liquid at a pre-selected pressure will force the wall members of the duck bill valve 395 apart to permit flow between them from the middle chamber 377 into the lower chamber 382. A suitable pre-selected pressure may be that determined by when the tubular middle chamber 377 is full of liquid. The duck bill valve 395 prevents liquid flow in the opposite direction by the close surface contact between its wall members.

The lower chamber 382 has a ceiling 370,377, a tubular lower chamber wall 380 and a shelving lower chamber floor 385. The ceiling 370,377 of the lower chamber 382 is formed by the upper chamber floor 370 and middle chamber 377 and forms an opening which is normally closed by diaphragm check valve 390. Lower chamber floor 385 shelves to form an opening for outlet 320 such that lower chamber floor 385 has an inverted truncated conical shape and such that the lower chamber floor 385 has a funnel shape for directing liquid to outlet 320. Outlet 320 has a tubular shape and has an outer thread 310 for engaging with a tap connector (or other pipe fitting).

## Claims

1. A plumbing device in the form of a connector (100) provided as a single piece comprising an inlet connector (105), a chamber having an open upper chamber (162), a lower closable chamber (182), and an outlet connector (120) formed in a floor (185) of the lower chamber (182) wherein the upper chamber (162) comprises a circumferential upper chamber wall (165) and an upper chamber floor (170) and the inlet connector (105) is supported above the upper chamber wall (165) by one or more arms (125) arranged to provide a vertical air gap of type AA between the inlet connector (105) and the upper chamber (165) such that the connector (100) provides an adapted tundish and wherein the upper chamber floor (170) has an upper chamber floor opening (175); and,
the connector (100) is provided with a non-return valve (142; 290; 395) which is arranged to open at a pre-selected pressure, the upper chamber floor opening (175) providing an opening into the lower chamber (182), such that the lower chamber (182) is closable from the upper chamber by the non-return valve.

2. A connector as defined in Claim 1 wherein the chamber has a tubular middle chamber (177) arranged between the upper chamber (162) and the closable lower chamber (182).

3. A connector as defined in Claim 2 wherein the pre-selected pressure is no more than the pressure from a volume of liquid which can fill the tubular middle chamber (177).

4. A connector as defined in any one of the preceding Claims wherein the non-return valve (142; 290; 395) is a diaphragm check valve, a lift valve or a duck bill valve.

5. A connector as defined in any one of the preceding Claims wherein the non-return valve is a lift valve (142) having a valve stem (140).

6. A connector as defined in Claim 5 wherein the circumferential upper chamber wall (165) provides one or more ribs (130) to support a valve guide (135) for the valve stem (140).

7. A connector as defined in any one of Claims 4 to 6 wherein the lift valve (142) has a resilient member (155) to bias it into a closed position.

8. A connector as defined in Claim 7 where dependent on Claim 6 wherein the resilient member (155) is arranged on the lift valve (142) above the valve guide (135).

9. A connector as defined in Claim 7 or Claim 8 wherein the resilient member (155) is secured on the lift valve (142) by a removable clip (160).

10. A connector as defined in Claim 9, wherein the lift valve (142) has a valve disc (145) with a diameter less than the diameter of the outlet (120) such that one or more components of the lift valve (142) may be replaced.

11. A connector as claimed in any preceding claim, wherein the circumferential upper chamber wall (165) supports the one or more arms (125).

## Patentansprüche

1. Klempnervorrichtung in Form eines Verbindungsstücks (100), das als ein einzelnes Stück bereitgestellt ist, umfassend ein Einlassverbindungsstück (105), eine Kammer mit einer offenen oberen Kammer (162), einer unteren verschließbaren Kammer (182) und einem in einem Boden (185) der unteren Kammer (182) geformten Auslassverbindungsstück (120), wobei die obere Kammer (162) eine obere Kammerumfangswand (165) und einen oberen Kammerboden (170) umfasst und das Einlassverbindungsstück (105) durch einen oder mehrere Arme (125) über der oberen Kammerwand (165) gestützt wird, die angeordnet sind, um einen vertikalen Luftspalt vom Typ AA zwischen dem Einlassverbindungsstück (105) und der oberen Kammer (165) bereitzustellen, so dass das Verbindungsstück (100) einen angepassten Verteiler bereitstellt und wobei der obere Kammerboden (170) eine obere Kammerbodenöffnung (175) aufweist; und
das Verbindungsstück (100) mit einem Rückschlagventil (142; 290; 395) bereitgestellt ist, das angeordnet ist, um sich bei einem vorher ausgewählten Druck zu öffnen, wobei die obere Kammerbodenöffnung (175) eine Öffnung in die untere Kammer (182) bereitstellt, so dass die untere Kammer (182) durch das Rückschlagventil zur oberen Kammer verschlossen werden kann.

2. Verbindungsstück nach Anspruch 1, wobei die Kammer eine schlauchförmige mittlere Kammer (177) aufweist, die zwischen der oberen Kammer (162) und der verschließbaren unteren Kammer (182) angeordnet ist.

3. Verbindungsstück nach Anspruch 2, wobei der vorher ausgewählte Druck nicht höher als der Druck von einem Flüssigkeitsvolumen ist, das die schlauchförmige mittlere Kammer (177) füllen kann.

4. Verbindungsstück nach einem der vorangehenden Ansprüche, wobei das Rückschlagventil (142; 290; 395) ein Membranrückschlagventil, ein Hubventil oder ein Entenschnabelventil ist.

5. Verbindungsstück nach einem der vorangehenden Ansprüche, wobei das Rückschlagventil ein Hubventil (142) mit einem Ventilschaft (140) ist.

6. Verbindungsstück nach Anspruch 5, wobei die obere Kammerumfangswand (165) eine oder mehrere Rippen (130) zum Stützen einer Ventilführung (135) für den Ventilschaft (140) bereitstellt.

7. Verbindungsstück nach einem der Ansprüche 4 bis 6, wobei das Hubventil (142) ein elastisches Element (155) aufweist, um es in eine geschlossene Position vorzuspannen.

8. Verbindungsstück nach Anspruch 7, in Abhängigkeit von Anspruch 6, wobei das elastische Element (155) auf dem Hubventil (142) über der Ventilführung (135) angeordnet ist.

9. Verbindungsstück nach Anspruch 7 oder Anspruch 8, wobei das elastische Element (155) durch eine abnehmbare Klammer (160) auf dem Hubventil (142) befestigt ist.

10. Verbindungsstück nach Anspruch 9, wobei das Hubventil (142) eine Ventilscheibe (145) mit einem Durchmesser aufweist, der kleiner als der Durchmesser des Auslasses (120) ist, so dass eine oder mehrere Komponenten des Hubventils (142) ersetzt werden können.

11. Verbindungsstück nach einem der vorangehenden Ansprüche, wobei die obere Kammerumfangswand (165) den einen oder die mehreren Arme (125) stützt.

## Revendications

1. Dispositif de plomberie sous la forme d'un raccord (100) fourni sous forme d'une unique pièce comprenant un raccord d'entrée (105), une chambre possédant une chambre supérieure ouverte (162), une chambre inférieure pouvant être fermée (182) et un raccord de sortie (120) formé dans un plancher (185) de la chambre inférieure (182), ladite chambre supérieure (162) comprenant une paroi circonférentielle (165) de chambre supérieure et un plancher (170) de chambre supérieure et ledit raccord d'entrée (105) étant supporté au-dessus de la paroi (165) de chambre supérieure par un ou plusieurs bras (125) agencés pour fournir un espace d'air vertical de type AA entre le raccord d'entrée (105) et la chambre supérieure (165) de sorte que le raccord (100) fournisse un entonnoir adapté et ledit plancher (170) de chambre supérieure possédant une ouverture (175) de plancher de chambre supérieure ; et,
ledit raccord (100) étant doté d'un clapet anti-retour (142, 290, 395) qui est agencé pour s'ouvrir à une pression présélectionnée, l'ouverture (175) de plancher de chambre supérieure fournissant une ouverture dans la chambre inférieure (182), de sorte que la chambre inférieure (182) puisse être fermée à partir de la chambre supérieure par le clapet anti-retour.

2. Raccord selon la revendication 1, ladite chambre possédant une chambre centrale tubulaire (177) agencée entre la chambre supérieure (162) et la chambre inférieure pouvant être fermée (182).

3. Raccord selon la revendication 2, ladite pression présélectionnée n'étant pas supérieure à la pression d'un volume de liquide qui peut remplir la chambre centrale tubulaire (177).

4. Raccord selon l'une quelconque des revendications précédentes, ledit clapet anti-retour (142, 290, 395) étant un clapet anti-retour à diaphragme, une soupape de levage ou une soupape à bec de canard.

5. Raccord selon l'une quelconque des revendications précédentes, ledit clapet anti-retour étant une soupape de levage (142) possédant une tige de soupape (140).

6. Raccord selon la revendication 5, ladite paroi circonférentielle (165) de chambre supérieure fournissant une ou plusieurs nervures (130) pour supporter un guide de soupape (135) pour la tige de soupape (140).

7. Raccord selon l'une quelconque des revendications 4 à 6, ladite soupape de levage (142) possédant un élément élastique (155) pour la solliciter dans une position fermée.

8. Raccord selon la revendication 7 lorsqu'elle dépend de la revendication 6, ledit élément élastique (155) étant agencé sur la soupape de levage (142) au-dessus du guide de soupape (135).

9. Raccord selon la revendication 7 ou 8, ledit élément élastique (155) étant fixé sur la soupape de levage (142) par un clip amovible (160).

10. Raccord selon la revendication 9, ladite soupape de levage (142) possédant un disque de soupape (145) avec un diamètre inférieur au diamètre de la sortie (120) de sorte qu'un ou plusieurs composants de la soupape de levage (142) puissent être remplacés.

11. Raccord selon l'une quelconque des revendications précédentes, ladite paroi circonférentielle (165) de chambre supérieure supportant le ou les bras (125).
